# EUROPEAN PATENT APPLICATION

(11) **EP 2 362 623 A1**
(43) Date of publication of application: **31.08.2011**
(21) Application number: 10154944.2
(22) Date of filing: 26.02.2010
(51) Int. Cl.: H04M 3/436, H04Q 3/62

(54) **Optimizing mobile terminated/mobile initiated call legs**

(71) Applicant: RESEARCH IN MOTION LIMITED, Waterloo, Ontario N2L 3W8 (CA)
(72) Inventor: Spencer, Bradford Lawrence, Bedford Nova Scotia B4B 0G4 (CA)
(74) Representative: Barrett, Peter Andrew John

(57) **Abstract**

A PBX can receive a call for a mobile device, and can send a message over a data channel to the mobile device indicating such. The mobile device can open a voice channel for the call. The mobile device inspects information about the call, such as calling party information, and using historical information, such as statistics relating to acceptance of calls from that calling party to predict whether a user of the mobile device is likely to answer the call or not. If the mobile device predicts that the user is probably going to answer the call, then the mobile device begins establishing the voice channel before the user answers the call (e.g., by accepting through the user interface). However, if the mobile device predicts that the user is not going to answer the call, then the mobile device waits until the user actually answers the call to begin establishing the voice channel.

## Description

### BACKGROUND

### Field:

The following relates to mobile telephony, and more particularly to optimization of calls that are terminated or initiated by mobile devices.

### Related Art:

Although much emphasis has been placed, of late, on providing data communication capabilities on mobile phones, voice services and voice communications remain an important feature to be made available on mobile devices.

Mobile devices in many cases continue to be tariffed differently than PSTN-based devices. For example, a mobile device may accrue charges for outgoing calls (e.g., minutes for outgoing calls will be counted against an allocation), while incoming calls do not accrue such charges. Other aspects of a user experience of voice calling on mobile devices include how much delay there is in call establishment. It would be beneficial to continue to improve such user experiences and tailor mobile device voice telephony usage to reduce unnecessary charges.

### BRIEF DESCRIPTION OF THE DRAWINGS

FIG. 1 depicts an example system view in which aspects described herein can be practiced;

FIG. 2 depicts an example mobile device view in which aspects described herein can be practiced;

FIG. 3 depicts a schematic example of a switching network that can implement voice channels, which can be used for voice calls, according to the description herein;

FIG. 4 depicts an example method;

FIGs. 5-9 depict example methods which can be used for call acceptance prediction, as depicted in FIG. 4;

FIG. 10 depicts a method of maintaining information to be used in call acceptance prediction; and

FIG. 11 depicts an example composition of a mobile device, such as that illustrated in FIG. 2.

### DESCRIPTION

The following description provides examples and other disclosure, which teach those of ordinary skill in the art how to practice implementations of inventive aspects described herein. As such, the description is not limiting, but rather is exemplary.

For convenience, in this description, the terms "mobile phone" and "mobile communications device" generally can be used to refer to any portable or mobile network-enabled device that has capabilities to send and receive voice calls and may also be able to send and receive data, such as data generated by web browsing, e-mail, SMS, instant messaging, and the like. As will become clear, a variety of devices in a variety of form factors can meet such a definition, including, for example, phones, smartphones, laptops configured with appropriate network connections and user input devices, tablet computers, navigation devices embedded in automobiles, and netbooks.

In one example, aspects of this description relate to optimization of mobile terminated/mobile initiated (MTMF) calls. In one system architecture, a system (e.g., a server) can function as a Private Branch eXchange (PBX) for mobile devices, and provide functions such as call forwarding to mobile devices. In one example, the system can receive a call that is to be forwarded to a mobile device. The system can signal, over a data channel to the mobile device, that the system has a call to be forwarded to the mobile device. The mobile device can respond by beginning to initiate a voice channel before the user of the mobile device has indicated that the call is to be accepted (an early call). Alternatively, the mobile device can begin initiation of the voice channel responsive to the user indicating that the call is to be accepted (a late call). In the former case, a delay perceived by the user will be shorter, or possibly even zero. However, the former case also can incur fees and charges, even if the user ignores or rejects the call.

Devices may be pre-configured to perform either early or late calls. However, further optimizations may be available. In one example, information about the calling party (i.e., the party that called the PBX, or more generally, any entity that can receive such calls) and prior history of how the user responded to calls from that party is used to predict whether the user will answer the call. If the prediction is that the user will answer the call, then an early call strategy is used. If the prediction is that the user will not answer the call, a late call strategy is used. A variety of example approaches to making such predictions will be described below.

In the above manner, these aspects can improve user experience, by reducing call setup delay, while avoiding increased costs of early call setup in situations where the user may ultimately not want to have the call established at all.

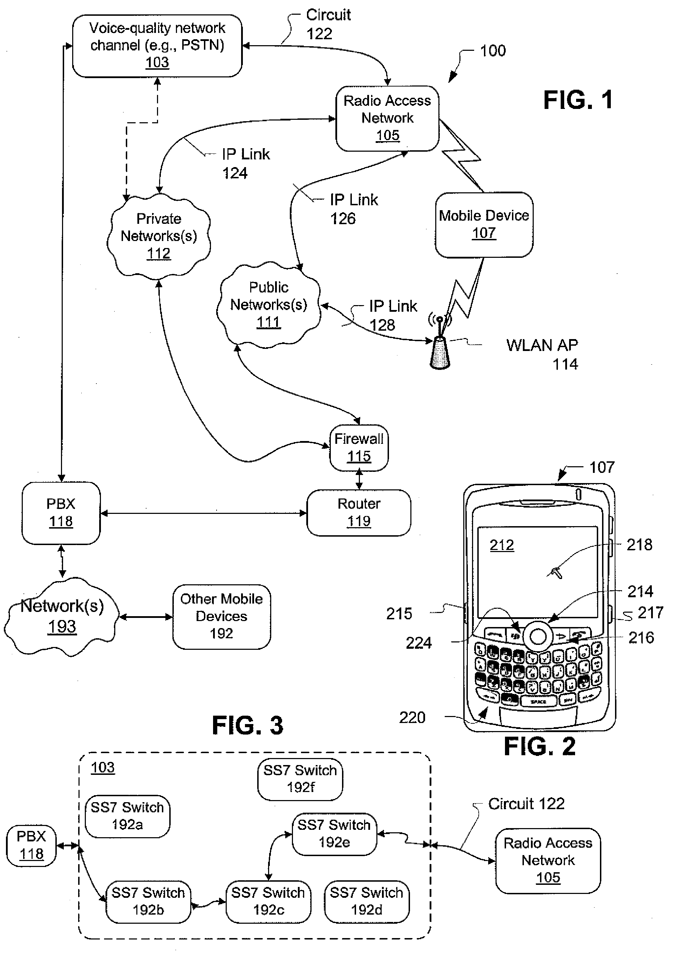

In a more-specific example, FIG. 1 depicts a system architecture 100 in which a data and voice-enabled mobile device 107 can operate. A Radio Access Network (RAN) 105 provides broadband wireless access to device 107. RAN 105 communicates wirelessly with device 107, and connects device 107 via a circuit 122 with a voice-quality network channel 103. Voice-quality network 103 can serve as a bearer channel for voice calls in which mobile device 107 participates, and can comprise portions of the Public Switched Telephone Network (PSTN).

RAN 105 also can connect through an IP link 124 to private network(s) 112 and through an IP link 126 to public network(s) 111. Usage of IP is exemplary and other addressing systems can be provided. For example, private networks 112 can use X25 addressing and also can be implemented using Virtual Private Network (VPN) technology to carry data over public networks 111.

Mobile device 107 also can have an interface for communication using local area wireless network technologies, such as 802.11 series technologies. When using such technologies for communication, mobile device 107 typically interfaces with a wireless LAN access point 114, which can communicate over public network(s) 111, such as through a router (not depicted). Communications on this medium also can be addressed using IP, as depicted by labeling the link IP link 128.

Each voice call in which mobile device 107 participates can be terminated at the PBX, or the device 107. A router 119 can communicate with a firewall 115. Firewall 115 can directly communicate to and receive communication from public network(s) 111 and private network(s) 112 that originate from PBX 118, or which otherwise involve signaling concerning voice calls that travels over the data network (such as the data network elements depicted in FIG. 1).

FIG. 1 also depicts the existence of other networks 193 and other devices 192, which can call into PBX 118. The existence of such other devices 192 is for setting context that PBX 118 may be getting any number of incoming voice calls at a given time. For example, a larger PBX, for a company or company site with several thousand employees would be expected to have a large number of calls incoming to the PBX in any given period of time.

Referring to FIG. 2, there is depicted an example of mobile device 107. Mobile device 107 comprises a display 212 and the cursor or view positioning device 214, shown in this implementation as a trackball 214, which may serve as another input member and is both rotational to provide selection inputs and can also be pressed in a direction generally toward housing to provide another selection input. Trackball 214 permits multi-directional positioning of a selection cursor 218, such that the selection cursor 218 can be moved in an upward direction, in a downward direction and, if desired and/or permitted, in any diagonal direction. The trackball 214 is in this example situated on a front face (not separately numbered) of a housing, to enable a user to manoeuvre the trackball 214 while holding mobile device 107 in one hand.

The display 212 may provide that selection cursor 218 depicts generally where the next input or selection will be received. The selection cursor 218 may comprise a box, alteration of an icon or any combination of features that enable the user to identify the currently chosen icon or item. The mobile device 107 in Figure 2 also comprises a programmable convenience button 215 to activate a selected application such as, for example, a calendar or calculator. Further, mobile device 107 can include an escape or cancel button 216, a camera button 217, a menu or option button 224 and a keyboard 220. Camera button 217 is able to activate photo-capturing functions when pressed preferably in the direction towards the housing. Menu or option button 224 loads a menu or list of options on display 212 when pressed. In this example, the escape or cancel button 216, menu option button 224, and keyboard 220 are disposed on the front face of the mobile device housing, while the convenience button 215 and camera button 217 are disposed at the side of the housing. This button placement enables a user to operate these buttons while holding mobile device 107 in one hand. The keyboard 220 is, in this example, a standard QWERTY keyboard.

FIG. 3 depicts a simplified example of how a voice channel may be setup, over the voice network 103 depicted in FIG. 1. FIG. 3 depicts that voice network 103 may comprise a number of switches (e.g., SS7 switches 192a-f), which, based on signaling, can be used to establish a circuit between an ingress point and an egress point from network 103. As depicted, a selection of the switches, such as SS7 switches 192b, 192c and 192e are used in making circuit 122. The selection of appropriate switches, allocation of resources at those switches, and the establishment of connections among the switches can take time, which can result in a perceived delay to begin using the circuit 122 for voice communication.

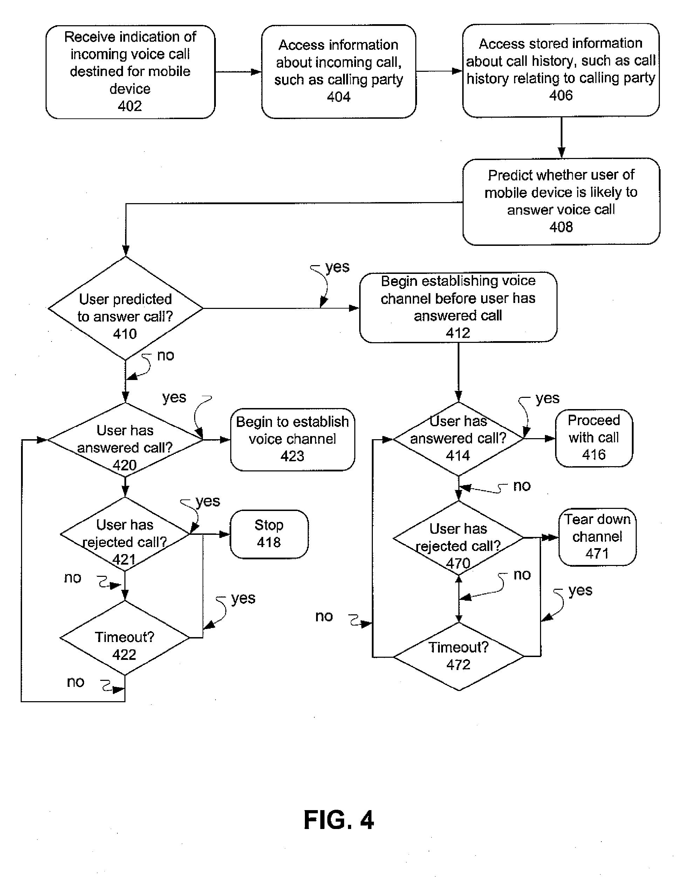

FIG. 4 depicts a method in which a predictive setup of such a voice channel is begun for a call incoming to a mobile device, before there has been an actual disposition of the incoming call (e.g., an ignore or answer disposition). In particular, FIG. 4 depicts that an indication of an available incoming call destined for a mobile device is received (402). For example, when PBX 118 has received a call (an "incoming call") to be forwarded to mobile device 107, PBX 118 can arrange for an indication of such incoming call to be sent to device 107 over a data channel, such as through router 119 and over any of the networks depicted in FIG. 1 (such as public network 111 or private network 112).

Information about the incoming call is accessed (404). For example, ANI or caller-ID information, which identifies a calling party placing the incoming call, can be accessed. This data can be presented over a data channel that signaled the availability of the call.

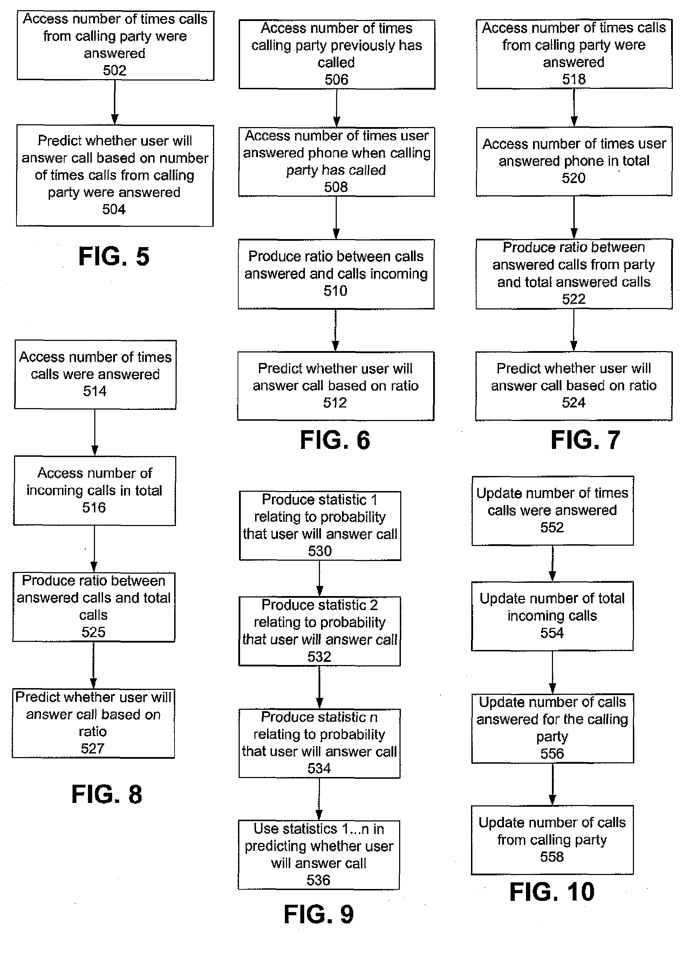

Information about history of call disposition is then accessed (406). Such information can include information about a number of calls that have been placed by the calling party to the mobile device, a number of calls from the calling party that have been answered at the mobile device, a number of calls in total that have been placed to the mobile device, and a number of calls in total that have been answered at the mobile device, for example. Based on this stored information and the calling party information, a prediction (408) whether the user at the mobile device is likely to answer the incoming call is made. Further aspects of such prediction are described with respect to FIGs. 5-9; however, by way of brief example, if a ratio of the calls answered versus the total number of calls incoming from the calling party is low (i.e., the user rarely answers the phone when this calling party calls), then the prediction would be that the user will not answer the phone at this time.

Based on the prediction, a decision (410) is made as to whether to begin establishing (412) a voice channel to be used for the voice call or not. In particular, if the user was predicted to answer, then the voice channel establishment will be started. Otherwise, FIG. 4 depicts that the method will await a disposition of the call by the user. Such disposition, in this example, can comprise a determination whether the user has answered (420) the call, and if so, then voice channel establishment can begin (423). If the user has not yet answered, then a decision can be made as to whether the user selected to ignore/reject (421) the call. If the user rejected the call, then the method can stop (418), or take another suitable action. A timeout decision (422) can be made, which in the occurrence of a timeout, can also cause the method to stop (418). Otherwise, a loop to again determine whether user has answered (420) can be provided.

Returning to the response to predicting that the user will answer (408, 410, 412), the method also can check whether the call has been answered (414), and if so, then the call can proceed (416). If the call has been rejected/ignored (470) or there was a timeout (472), then the voice channel which was begun can be torn down 471). Otherwise, there can be a loop to again determine whether user has answered (414).

The method of FIG. 4 depicts an example approach to implementing the predictive aspects disclosed herein. A logically equivalent method may be provided by those of ordinary skill in the art that would differ from an order or arrangement of the elements depicted in FIG. 4.

The methods depicted in FIGs. 5-9 relate to more specific examples of how call disposition predictions can be made. These examples also are by way of explanation, rather than limitation, as those of ordinary skill in the art would be able to provide other call disposition predictive mechanisms based on these disclosures.

FIG. 5 depicts that one approach to call disposition prediction can include accessing (502), such as from a memory, data representative of a number of times that calls from the calling party were answered, and predicting (504) whether the user will answer based on such number. For example, if there were prior calls from the calling party, but none were answered, then the prediction can be that the user will not answer this call either.

FIG. 6 depicts that another method can involve accessing a number of times that the calling party has called (506), accessing a number of times that the user answered when the calling party called (508), producing a ratio between the answers and the total (510) and predicting (512) whether the user will answer the call based on the ratio. For example, if the ratio indicates that more than half of the calls were answered, then this call will be predicted to be answered.

FIG. 7 depicts another prediction method, in which stored information concerning a number of times calls from the calling party were answered can be accessed (518). Other information that can be accessed (520) relates to a number of times, in total, that the user answered the phone. A ratio between the number of calls answered from the calling party to the total number of answered calls can be produced (522), and a prediction is made (524) based on that ratio.

FIG. 8 depicts another prediction method in which a number of times that calls were answered is accessed (514); a number of incoming calls in total is accessed (516), a ratio between such total number of calls answered and number of incoming calls in total is produced (525), and a prediction made based on that ratio (527).

Each of the above ratios, and more generally, the comparisons between the data elements described, can be viewed as a statistic that can be used in predicting whether the user will answer the phone for a given incoming call. FIG. 9 depicts that multiple such statistics can be used in forming such a prediction.

In particular, FIG. 9 depicts that a statistics 1...n can be produced (steps 530, 532, and 534) and those statistics can be used in making a prediction (536) about whether the call will be answered. For example, each of the ratios described with respect to FIGs. 6-8 can be a statistic used in the method of FIG. 9.

FIG. 10 depicts that the data that can be used in producing the statistics or otherwise making the predictions described with respect to FIGs. 4-9 can be gathered and maintained. In particular, a number of incoming calls can be updated (554), and a number of calls from the calling party can be updated (558), regardless of disposition of the incoming call. If the call was answered, then a total number of calls answered can be updated (552), as can a total number of calls answered from the calling party (556). These updated numbers can then be used for predictive purposes during for future incoming calls. The data can be stored as raw numbers, or some of the ratios described can be precomputed and stored. Still further, the prediction can be made in advance based on the data, and the prediction stored. For example, a flag can be stored with identifying information for a particular calling party that indicates to answer or ignore the next call from this particular calling party. Such data can be stored on the mobile device, in the network, on PBX 118, or in another suitable location.

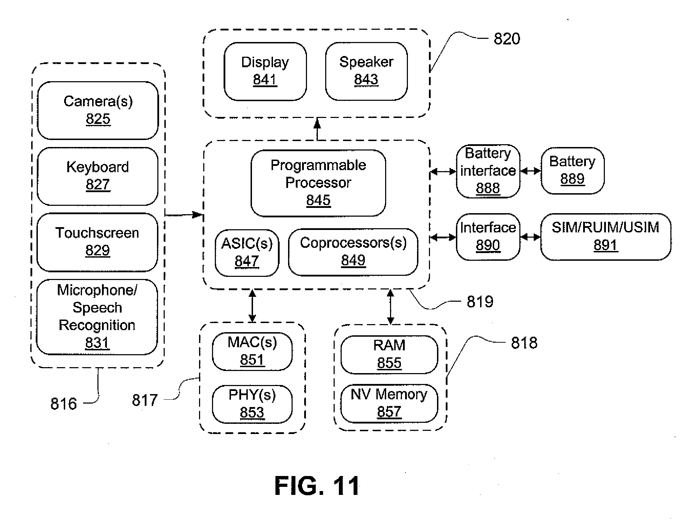

FIG. 11 depicts an example composition of a device which can perform the method aspects described above in processing resources, as well as store, or otherwise have access to a computer readable medium that stores code for configuring processing resources to perform such methods.

By particular example, FIG. 11 depicts that device 107 can be provided with components as follows. Device 107 can have a variety of components by which user input can be received, including a camera 825, a keyboard 827, a touch screen 829, and a microphone 831 that can be used for speech recognition, for example (collectively, input sources 816). These ways of receiving user input can be processed and ultimately coupled with processing resource 819 that can be comprised of a plurality of components, such as a programmable processor 845, one or more ASICs 847, as well as other co-processors 849. For example, an ASIC or co-processor may be provided for implementing graphics functionality, encryption and decryption, audio filtering, and other such functions that often involve many repetitive, math-intensive steps. Processing resource 819 also may interface with one or more network interfaces 817, each of which may be comprised of one or more Media Access Controllers (MACs) 851, which in turn interface with physical layers 853.

Processing resource 819 also may interface with a memory resource 818 which may be comprised of a plurality of memories, including a RAM 855, and a non-volatile memory 857, which can be implemented with one or more of Flash memory, PROM, EPROM, and so on. Non-volatile memory 857 can be implemented as flash memory, ferromagnetic, phase-change memory, and other non-volatile memory technologies. Non-volatile memory 857 also can store programs, device state, various user information, one or more operating systems, device configuration data, and other data that may need to be accessed persistently. Such memory 818 can be used for storing the call history, statistics, and/or flags, which were described with respect to the method aspects above.

Processing resource 819 also may interface with user output 820 components, which can include a display 841, as well as a speaker 843, which can be used for text to speech or for performing audio, more generally.

A battery interface 888 interfaces a battery 889 with processing resource 819. Battery interface 888 can provide battery status updates and manage recharging of the battery, for example. Processing resource 819 also can couple, through an interface 890, with a SIMIRUIMIUSIM 891, to enable communication over protocols that would use each.

Aspects described above can be implemented as computer executable code modules that can be stored on computer readable media, read by one or more processors, and executed thereon. Such computer readable media can be read by such processors over a network, which can be implemented using wired and wireless network technologies. In addition, separate boxes or illustrated separation of functional elements of illustrated systems does not necessarily require physical separation of such functions, as communications between such elements can occur by way of messaging, function calls, shared memory space, and so on, without any such physical separation.

Although certain disclosures were provided with respect to certain portions of the figures and in certain examples, the structures or functions disclosed therein can be used or adapted for use with the structures or functions disclosed with respect to other portions of the disclosures and figures. More generally, a person of ordinary skill would be able to adapt these disclosures to implementations of any of a variety of communication devices. Similarly, a person of ordinary skill would be able to use these disclosures to produce implementations on different physical platforms or form factors without deviating from the scope of the claims and their equivalents.

## Claims

1. A method of providing voice services at mobile devices, comprising:
determining availability of an incoming voice call to a mobile device;
accessing stored historical call disposition information from a computer readable medium, including information relating to dispositions of prior voice calls related to the incoming voice call;
before the incoming voice call is disposed of at the mobile device, predicting whether the incoming voice call will be answered, as a disposition, at the mobile device, based on the historical call disposition information; and
responsive to predicting that the disposition of the incoming voice call will be that the incoming voice call will be answered at the mobile device, beginning establishment of a voice channel for the mobile device to use while participating in the incoming voice call, if actually accepted, before the mobile device receives input indicative of the actual disposition of the incoming voice call.

2. The method of claim 1, wherein the determining further comprises at least one of providing an indication of availability of the incoming voice call to the mobile device, over a data channel and receiving an indication of availability of the incoming voice call to the mobile device, over the data channel.

3. The method of any one of claims 1 and 2, further comprising:
responsive to predicting that the disposition of the incoming voice call will be that the incoming voice call will not be answered, beginning establishment of an outgoing voice channel from the mobile device for completing the incoming call, after the mobile device receives the input indicative of the actual disposition of the incoming voice call, and determines that the input indicates acceptance of the incoming voice call.

4. The method of any one of claims 1-3, wherein the historical call disposition information further comprises a statistic relating to whether calls from a calling party that is originating the incoming voice call are typically answered, the statistic including one or more of (1) a ratio of a number of calls from the calling party that is originating the incoming voice call that are answered to at least one of a total number of calls answered, and a total number of calls incoming to the mobile device, and (2) a ratio of answered calls to a total number of calls incoming from the calling party that is originating the incoming voice call.

5. A computer readable medium storing computer executable instructions for programming a processor to perform a method, comprising:
during a time when an incoming voice call is available at a call server for a mobile device, predicting whether the incoming voice call will be accepted at the mobile device based on information about the incoming voice call and information about prior responses to similar voice calls; and
responsive to predicting that the incoming voice call will be accepted, beginning establishment of a voice channel to be used during the incoming voice call, before the incoming voice call has been accepted at the mobile device.

6. The computer readable medium of claim 5, wherein the method further comprises responsive to predicting that the incoming call will not be accepted, beginning establishment of the voice channel after the incoming call has been accepted at the mobile device.

7. The computer readable medium of any one of claims 5-6, wherein the medium further stores, as the information about prior responses to similar calls, data about previous responses to previous calls placed by a party placing the incoming call.

8. The computer readable medium of any one of claims 5-7, wherein the information about the incoming call further comprises identifying information about a party placing the incoming call, and the information about prior responses to similar calls comprises data about how calls from that party previously were disposed at the mobile device.

9. The computer readable medium of claim 5-7, wherein the method further comprises performing the prediction based on statistics relating dispositions of prior calls from the calling party placing the incoming call to one or more of a total number of calls from the calling party, a total number of calls to the mobile device, and a total number of calls answered at the mobile device.

10. The computer readable medium of claim 5-7, wherein the computer readable medium further stores data from which statistics relating dispositions of prior calls from the party placing the incoming call to one or more of a total number of calls from the calling party, a total number of calls to the mobile device, and a total number of calls answered at the mobile device can be formed.

11. A system for establishing voice calls involving mobile phones, comprising:
a voice channel interface to be used during an incoming voice call to a mobile phone;
a data interface module to signal the availability of the incoming voice call to the mobile phone; and
a processing module programmed to predict, based on information about the incoming voice call, a disposition of the voice call through an interface of the mobile phone; and responsive to the prediction being that the disposition of the voice call will be that the voice call will be accepted, to begin establishing, through the voice channel interface, a voice channel to be used during the voice call, before an actual disposition of the voice call at the mobile phone.

12. The system of claim 11, wherein the processing module further is programmed to be responsive to the prediction being that the disposition of the voice call will be that the voice call will be rejected, by waiting for an actual acceptance of the voice call to begin establishing the voice channel.

13. The system of claim 11, further comprising a display, the processing module coupled with the display through an output to provide an indication of availability of the incoming voice call on the interface.

14. The system of claim 11, wherein the processing module is located with the mobile device.

15. The system of claim 11, further comprising a computer readable medium storing call history data to be used in making the prediction about the disposition of the voice call, the call history data comprising one or more of (1) data about call dispositions for a party placing the incoming voice call and (2) statistics relating to a propensity for voice calls from the party placing the incoming voice call to be accepted or rejected.

## Amended claims

### Amended claims in accordance with Rule 137(2) EPC.

**1.** A method of providing voice services at mobile devices, comprising:
determining (402) availability of an incoming voice call to a mobile device (107);
accessing (406) stored historical call disposition information from a computer readable medium, including information relating to dispositions of prior voice calls related to the incoming voice call;
before the incoming voice call is disposed of at the mobile device, predicting (408) whether the incoming voice call will be answered (410), as a disposition, at the mobile device, based on the historical call disposition information;
responsive to predicting that the disposition of the incoming voice call will be that the incoming voice call will be answered at the mobile device (107), beginning establishment of a voice channel (122) for the mobile device to use while participating in the incoming voice call, if actually accepted, before the mobile device receives (420, 421) input indicative of the actual disposition of the incoming voice call and
after the mobile device receives (414, 420, 421) input indicative of the actual disposition of the incoming voice call, determining that the input indicates acceptance of the incoming voice call, and responsively proceeding (416) to establish the voice channel, or beginning (423) the establishment of the voice channel if the disposition of the incoming voice call was predicted (410) to be other than acceptance, and alternatively tearing down (471) the voice channel if the actual disposition (421, 470) was other than acceptance.

**2.** The method of claim 1, wherein the determining (402) further comprises at least one of providing an indication of availability of the incoming voice call to the mobile device, over a data channel and receiving an indication of availability of the incoming voice call to the mobile device, over the data channel.

**3.** The method of any one of claims 1 and 2, wherein the historical call disposition information further comprises a statistic (502, 506, 518) relating to whether calls from a calling party that is originating the incoming voice call are typically answered, the statistic including one or more of (1) a ratio of a number of calls from the calling party that is originating the incoming voice call that are answered to at least one of a total number of calls answered, and a total number of calls incoming to the mobile device, and (2) a ratio of answered calls to a total number of calls incoming from the calling party that is originating the incoming voice call.

**4.** A computer readable medium (818) storing computer executable instructions for programming a processor (819) in a mobile device to perform a method, comprising:
during a time when an incoming voice call is available at a call server for a mobile device, predicting (504, 512, 524, 527, 536) whether the incoming voice call will be accepted at the mobile device based on information about the incoming voice call and information about prior responses to similar voice calls;
responsive to predicting that the incoming voice call will be accepted, beginning (412) establishment of a voice channel from the mobile device to be used during the incoming voice call, before the incoming voice call has been accepted at the mobile device; and
responsive to predicting that the incoming call will not be accepted, beginning (423) establishment of the voice channel after the incoming call has been accepted at the mobile device.

**5.** The computer readable medium of claim 4, wherein the medium further stores, as the information about prior responses to similar calls, data (502, 504) about previous responses to previous calls placed by a party placing the incoming call.

**6.** The computer readable medium of any one of claims 4 and 5, wherein the information about the incoming call further comprises identifying information about a party placing the incoming call, and the information about prior responses to similar calls comprises data about how calls from that party previously were disposed (508) at the mobile device.

**7.** The computer readable medium of any one of claims 4-6, wherein the method further comprises performing the prediction (504) based on statistics relating dispositions of prior calls from the calling party placing the incoming call to one or more of a total number of calls from the calling party, a total number of calls to the mobile device, and a total number of calls answered at the mobile device.

**8.** The computer readable medium of claim 4 and 5, wherein the computer readable medium further stores data from which statistics relating dispositions of prior calls from the party placing the incoming call to one or more of a total number of calls from the calling party, a total number of calls to the mobile device, and a total number of calls answered at the mobile device can be formed.

**9.** A mobile device (100) for establishing voice, comprising:
a voice channel interface (105, 128, 126, 124, 122) to be used during an incoming voice call to a mobile phone;
a data interface module (105, 128, 126, 124) to signal the availability of the incoming voice call to the mobile phone;
a display (212), the processing module coupled with the display through an output to provide an indication of availability of the incoming voice call on the interface
and
a processing module (819) programmed to predict, based on information about the incoming voice call, a disposition of the voice call through an interface of the mobile phone; and responsive to the prediction being that the disposition of the voice call will be that the voice call will be accepted, to begin establishing, through the voice channel interface, a voice channel to be used during the voice call, before an actual disposition of the voice call at the mobile phone, and further is programmed to be responsive to the prediction being that the disposition of the voice call will be that the voice call will be rejected, by waiting for an actual acceptance of the voice call to begin establishing the voice channel.

**10.** The system of claim 9, wherein the processing module is located with the mobile device.

**11.** The system of claim 9, further comprising a computer readable medium (818) storing call history data to be used in making the prediction about the disposition of the voice call, the call history data comprising one or more of (1) data about call dispositions for a party placing the incoming voice call and (2) statistics relating to a propensity for voice calls from the party placing the incoming voice call to be accepted or rejected.
